# EUROPEAN PATENT SPECIFICATION

(11) **EP 2 801 633 B1**
(45) Date of publication and mention of the grant of the patent: **25.10.2017**
(21) Application number: 12864342.6
(22) Date of filing: 26.12.2012
(51) Int. Cl.: C22C 38/00, C21D 9/46, C22C 38/32, C22C 38/54, C21D 8/02, C22C 38/02, C22C 38/04, C22C 38/06, C22C 38/28

(54) **HIGH CARBON HOT-ROLLED STEEL SHEET AND METHOD FOR PRODUCING SAME**
HEISSGEWALZTES CARBON-STAHLBLECH UND HERSTELLUNGSVERFAHREN DAFÜR
TÔLE D'ACIER LAMINÉE À CHAUD À FORTE TENEUR EN CARBONE ET SON PROCÉDÉ DE FABRICATION

(30) Priority: 06.01.2012 JP 2012000913
(43) Date of publication of application: 12.11.2014
(73) Proprietor: JFE Steel Corporation, Tokyo 100-0011 (JP)
(72) Inventor: NAKAMURA, Nobuyuki, Tokyo 100-0011 (JP); KOBAYASHI, Takashi, Tokyo 100-0011 (JP); FUNAKAWA, Yoshimasa, Tokyo 100-0011 (JP)
(74) Representative: Hoffmann Eitle
(86) International application number: PCT/JP2012/008319
(87) International publication number: WO 2013/102987

(56) References cited:
- EP-A1- 2 098 600
- JP-A- H08 120 405
- JP-A- 2002 309 345
- JP-A- 2005 097 740
- JP-B2- 3 792 341

## Description

### Technical Field

The present invention relates to a high carbon hot rolled steel sheet having excellent press formability and hardenability and a method for manufacturing the same.

### Background Art

At present, automotive parts, e.g., gears, transmissions, and seat recliners, have been produced by forming hot rolled steel sheets, which are carbon steels for machine structural use specified in JIS G 4051, through cold press forming into predetermined shapes and applying a hardening treatment to ensure a predetermined hardness. Consequently, a steel sheet as a material is required to have excellent press formability and hardenability, and various high carbon hot rolled steel sheets have been proposed previously.

For example, Patent Literature 1 discloses a hot rolled steel sheet having excellent impact properties after hardening and containing, as steel components, C: 0.10% to 0.37%, Si: 1% or less, Mn: 1.4% or less, P: 0.1% or less, S: 0.03% or less, sol. Al: 0.01% to 0.1%, N: 0.0005% to 0.0050%, Ti: 0.005% to 0.05%, B: 0.0003% to 0.0050%, and the remainder composed of Fe and incidental impurities, on a percent by mass basis, while B - (10.8/14)N* ≥ 0.0005% and N* = N - (14/48)Ti, where N* = 0 when the right side ≤ 0, are satisfied, wherein the average grain size of TiN which is a precipitate in the steel is 0.06 to 0.30 µm and a prior austenite grain size after hardening is 2 to 25 µm.

Also, Patent Literature 2 discloses a method for manufacturing a tempering free Ti-B bearing high carbon steel sheet having excellent formability and toughness, the method including the steps of plastic working a hot rolled steel sheet having a sheet thickness of 6 mm or less and a steel composition containing C: 0.15% to 0.40%, Si ≤ 0.35%, Mn: 0.6% to 1.50%, P ≤ 0.03%, S ≤ 0.020%, Ti: 0.005% to 0.1%, sol. Al: 0.01% to 0.20%, N: 0.0020% to 0.012%, B: 0.0003% to 0.0030%, and the remainder composed of substantially Fe, on a percent by mass basis, where B ≤ 0.0032 - 0.014 × sol. Al - 0.029 × Ti is satisfied, performing heat soaking in a temperature range of Ac₃ to 950°C, and performing quenching in water or oil.

Also, Patent Literature 3 discloses a high carbon hot rolled steel sheet having a composition containing C: 0.20% to 0.48%, Si: 0.1% or less, Mn: 0.20% to 0.60%, P: 0.02% or less, S: 0.01% or less, sol. Al: 0.1% or less, N: 0.005% or less, Ti: 0.005% to 0.05%, B: 0.0005% to 0.003%, Cr: 0.05% to 0.3%, and the remainder composed of Fe and incidental impurities, on a percent by mass basis, where Ti - (48/14)N ≥ 0.005 (in the formula, the symbols of elements express percent by mass of the contents of the respective elements) is satisfied, and a microstructure in which a ferrite average grain size is 6 µm or less, a carbide average grain size is 0.1 µm or more and less than 1.20 µm, and a volume fraction of ferrite grains substantially not containing carbide is 5% or less.

Patent Literature 4 relates to providing a steel for soft-nitriding, excellent in cold forgeability and showing satisfactory pitting resistance even in the case of application to parts, such as gear, to be subjected to high bearing force. Citation List

### Patent Literature

PTL 1: Japanese Patent No. 4265582
PTL 2: Japanese Unexamined Patent Application Publication No. 5-98356
PTL 3: Japanese Unexamined Patent Application Publication No. 2005-97740
PTL 4: JP 3 792341 B2

### Summary of Invention

### Technical Problem

However, as for the high carbon steel sheets described in Patent Literatures 1 to 3, degradation in the ductility and decrease in the hardness of a surface layer portions of the steel sheet after hardening are observed, and it is difficult to provide excellent press formability and excellent hardenability stably.

It is an object of the present invention to provide a high carbon hot rolled steel sheet having excellent press formability and excellent hardenability, in particular, hardenability of a surface layer portion of the steel sheet, stably and a method for manufacturing the same. Solution to Problem

The invention is defined by the subject-matter of appended claims 1 and 2. The present inventors performed intensive studies to achieve the above-described objects and, as a result, found the following.

i) The steel sheet becomes soft, the ductility is improved certainly, and excellent press formability is obtained stably by establishing a microstructure composed of ferrite and carbides, specifying the average grain size of the ferrite to be 10 to 20 µm, and specifying the spheroidization ratio of the carbides to be 90% or more.
ii) The average amount of N in a surface layer portion of the steel sheet becomes 0.1 percent by mass or more, decrease in the hardness of the surface layer portion of the steel sheet after hardening is suppressed, and excellent hardenability can be obtained stably by specifying the amount of Al to be 0.1 percent by mass or more and performing annealing to spheroidize carbides in an atmosphere primarily containing a nitrogen gas (hereafter simply referred to as spheroidizing annealing).

The present invention has been made on the basis of the above-described findings, and provides a high carbon hot rolled steel sheet having a chemical composition consisting of by mass%, C: 0.20% to 0.48%, Si: 0.1% or less, Mn: 0.5% or less, P: 0.03% or less, S: 0.01% or less, Al: 0.1% to 0.6%, Cr: 0.05% to 0.5%, B: 0.0005% to 0.0050%, Ca: 0.0010% to 0.0050%, optionally 2% or less in total of at least one of Cu, Ni, and Mo, optionally 0.10% or less in total of at least one of Ti and V, where the average amount of N in a surface layer portion from the surface to the position at a depth of 0.1 mm in thickness direction is 0.1% or more and the average amount of N in the central portion in thickness is 0.01% or less, and the remainder of the chemical composition being Fe and incidental impurities, on a percent by mass basis, and a microstructure of the high carbon hot rolled steel sheet is composed of ferrite and carbides, wherein the average grain size of the above-described ferrite is 10 to 20 µm and the spheroidization ratio of the above-described carbides is 90% or more.

According to the invention as defined in independent claim 2 the high carbon hot rolled steel sheet according to the present invention is produced by rough rolling the steel having the above-described chemical composition, performing hot rolling at a hot rolling finishing temperature of 850°C to 950°C, performing coiling at a coiling temperature of 500°C or higher, performing pickling, and performing spheroidizing annealing at an annealing temperature of 680°C or higher and the Ac₁ transformation point or lower in an atmosphere containing 50 percent by volume or more of nitrogen gas.

### Advantageous Effects of Invention

According to the present invention, a high carbon hot rolled steel sheet can be manufactured, wherein excellent press formability and excellent hardenability, in particular, hardenability of a surface layer portion of the steel sheet, are provided stably. The high carbon hot rolled steel sheet according to the present invention is suitable for automotive parts, e.g., gears, transmissions, and seat recliners.

### Description of Embodiments

A high carbon hot rolled steel sheet and a method for manufacturing the same according to the present invention will be described below in detail. In this regard, the term "%" which is the unit of the content of component refers to "percent by mass" unless otherwise specified.

### 1) Chemical composition

### C: 0.20% to 0.48%

Carbon is an element important for obtaining the hardness after hardening. It is necessary that the amount of C be at least 0.20% in order to obtain hardness required of automotive parts after press forming and hardening. On the other hand, if the amount of C is more than 0.48%, increase in hardness and reduction in ductility are facilitated and the press formability is degraded. Therefore, the amount of C is specified to be 0.20% to 0.48%, and preferably 0.26% to 0.48%.

### Si: 0.1% or less

If the amount of Si is more than 0.1%, increase in hardness and reduction in ductility are facilitated and the press formability is degraded. Therefore, the amount of Si is specified to be 0.1% or less, and preferably 0.05% or less. The amount of Si may be 0 (zero) with no problem.

### Mn: 0.5% or less

If the amount of Mn is more than 0.5%, not only increase in hardness and reduction in ductility are facilitated but also a band structure resulting from segregation develops and the microstructure becomes nonuniform, so that the press formability is degraded. Therefore, the amount of Mn is specified to be 0.5% or less, and preferably 0.4% or less. The amount of Mn may be 0 (zero) with no problem, although the amount of Mn is specified to be preferably 0.2% or more for the purpose of suppressing precipitation of graphite.

### P: 0.03% or less

If the amount of P is more than 0.03%, the press formability and the toughness after hardening are degraded significantly. Therefore, the amount of P is specified to be 0.03% or less, and preferably 0.02% or less. The amount of P may be 0 (zero) with no problem, although the amount of P is specified to be preferably 0.005% or more for the purpose of suppressing an increase in the cost.

### S: 0.01% or less

If the amount of S is more than 0.01%, the press formability and the toughness after hardening are degraded significantly. Therefore, the amount of S is specified to be 0.01% or less, and preferably 0.005% or less. The amount of S may be 0 (zero) with no problem.

### Al: 0.1% to 0.6%

Aluminum has a large chemical affinity for N and, therefore, N absorption is facilitated in such a way that the average amount of N in the surface layer portion of the steel sheet becomes 0.1% or more in performing spheroidizing annealing in an atmosphere primarily containing a nitrogen gas, decrease in the hardness of the surface layer of the steel sheet portion after hardening is suppressed, and the hardenability is improved. In order to exert the above-described effects, it is necessary that the amount of Al is specified to be 0.1% or more. On the other hand, if the amount of Al is more than 0.6%, not only the press formability is degraded as increase in hardness and decrease in ductility are facilitated because of solid solution strengthening, but also the hardenability is degraded as a hardening treatment from an austenite single phase region becomes difficult due to rise the transformation point. Consequently, the amount of Al is specified to be 0.1% to 0.6%.

### Cr: 0.05% to 0.5%

Chromium not only enhances the hardenability but also suppresses generation of graphite harmful to the hardenability. In order to exert the above-described effects, it is necessary that the amount of Cr is specified to be 0.05% or more. On the other hand, if the amount of Cr is more than 0.5%, increase in hardness and reduction in ductility are facilitated and the press formability is degraded. Consequently, the amount of Cr is specified to be 0.05% to 0.5%.

### B: 0.0005% to 0.0050%

Boron enhances the hardenability. For that purpose, it is necessary that the amount of B is specified to be 0.0005% or more. On the other hand, if the amount of B is more than 0.0050%, a load in hot rolling increases, the operability is degraded, and degradation in the press formability is caused. Consequently, the amount of B is specified to be 0.0005% to 0.0050%.

### Ca: 0.0010% to 0.0050%

Calcium makes the flow of molten steel smooth in casting. of a steel containing 0.1% or more of Al. In order to exert the above-described effect, it is necessary that the amount of Ca is specified to be 0.0010% or more. On the other hand, if the amount of Ca is more than 0.0050%, inclusions increase and the press formability is degraded. Consequently, the amount of Ca is specified to be 0.0010% to 0.0050%.

Average amount of N in surface layer portion from the surface to the position at a depth of 0.1 mm in thickness direction: 0.1% or more

As described above, N absorption is facilitated in such a way that the average amount of N in the surface layer portion of the steel sheet becomes 0.1% or more when the amount of Al is specified to be 0.1% or more and spheroidizing annealing is performed in an atmosphere primarily containing a nitrogen gas. Consequently, in the surface layer portion, the amount of solute N increases in the hardening treatment, not only the hardenability but also the hardness after hardening increases, so that decrease in the hardness of the surface layer portion of the steel sheet after hardening can be prevented. If the amount of Al is less than 0.1%, the average amount of N in the surface layer portion of the steel sheet does not become 0.1% or more, and reduction in the hardness of the surface layer portion of the steel sheet after hardening cannot be prevented sufficiently. Here, the surface layer portion refers to the whole region from the surface to the position at a depth of 0.1 mm in the sheet thickness direction.

### Average amount of N in the sheet thickness central portion: 0.01% or less

If the average amount of N in the central portion in thickness is more than 0.01%, formation of BN is facilitated even at the stage of hot rolling, and solute B to improve the hardenability is not obtained sufficiently, so that generation of ferrite is facilitated in cooling of the hardening treatment and the toughness after hardening is degraded. Therefore, the average amount of N in the central portion in thickness is specified to be 0.01% or less. Here, the average amount of N in the central portion in thickness refers to the amount of N in the steel sheet before spheroidizing annealing. Meanwhile, the central portion in thickness is specified to be a portion between the position at one-quarter of the sheet thickness and the position at three-quarters of the sheet thickness. The amount of N may be 0 (zero) with no problem, although the amount of N is specified to be preferably 0.001% or more in consideration of the cost.

The remainder is Fe and incidental impurities. It is possible to contain 2% or less in total of at least one of Cu, Ni, and Mo for the purpose of facilitating spheroidization of carbides and improving the hardenability and further or independently contain 0.10% or less in total of at least one of Ti and V for the purpose of suppressing generation of graphite and improving the hardenability.

### 2) Microstructure

In the present invention, it is necessary that a microstructure composed of the ferrite and carbides be established by performing spheroidizing annealing after the hot rolling for the purpose of improving the press formability. In particular, it is necessary that the average grain size of the ferrite is specified to be 10 to 20 µm and the spheroidization ratio of the carbides is specified to be 90% or more to provide excellent press formability and hardenability.

Here, the average grain size of the ferrite was an arithmetic average of grain sizes of 10 places determined by polishing a cross-section in thickness along the rolling direction of the steel sheet, etching with nital, observing 10 places in the vicinity of the central portion in thickness by using a scanning electron microscope at a magnification of 1,000 times, and determining the grain size at each place by a cutting method in conformity with JIS G 0552: 1998. Meanwhile, in the above-described microstructure observation, the ratio a/b of the maximum grain size a to the minimum grain size b of carbide was calculated at each place, and the proportion (%) of the number of grains of the carbide having the a/b of 3 or less to the whole number of grains of the carbide was determined and an arithmetic average of 10 places was taken as the spheroidization ratio of the carbides.

### 3) Manufacturing condition

### Hot rolling finishing temperature: 850°C to 950°C

The steel having the above-described chemical composition is made into a steel sheet having a predetermined sheet thickness by being subjected to hot rolling composed of rough rolling and finish rolling. At this time, if the hot rolling finishing temperature is lower than 850°C, austenite grains become fine in rolling, so that the average grain size of the ferrite after spheroidizing annealing becomes less than 10 µm. If the hot rolling finishing temperature is higher than 950°C, the average grain size of the ferrite becomes more than 20 µm. Therefore, the hot rolling finishing temperature is specified to be 850°C to 950°C.

### Coiling temperature: 500°C or higher

The steel sheet after hot rolling is coiled. If the coiling temperature is lower than 500°C, the average grain size of the ferrite and carbides after the spheroidizing annealing becomes fine, so that the press formability is degraded because of increase in hardness and reduction in ductility. Therefore, the coiling temperature is specified to be 500°C or higher. In this regard, in order to avoid degradation in surface quality due to scales, the coiling temperature is specified to be preferably 750°C or lower.

Spheroidizing annealing: annealing temperature of 680°C or higher and Ac₁ transformation point or lower in atmosphere containing 50 percent by volume or more of nitrogen gas

The steel sheet after coiling is subjected to scale removal through pickling and to spheroidizing annealing at an annealing temperature of 680°C or higher and the Ac₁ transformation point or lower in an atmosphere containing 50 percent by volume or more of nitrogen gas in order to spheroidize carbides, ensure a predetermined average grain size of ferrite, and specify the average amount of N in the surface layer of the steel sheet portion to be 0.1% or more. At this time, if the amount of nitrogen gas in the atmosphere is less than 50 percent by volume, it is not possible to specify the average amount of N in a surface layer portion from the surface to the position at a depth of 0.1 mm in thickness direction to be 0.1% or more. Also, if the annealing temperature is lower than 680°C, it is not possible to make the spheroidization ratio of the carbides 90% or more. In addition, if the annealing temperature is higher than the Ac₁ transformation point, an austenite phase is generated in the heating, pearlite is generated in the cooling, and the press formability is degraded. Therefore, it is necessary that the spheroidizing annealing be performed at an annealing temperature of 680°C or higher and the Ac₁ transformation point or lower in an atmosphere containing 50 percent by volume or more of nitrogen gas. Meanwhile, the annealing time in which the above-described temperature is maintained is preferably 20 to 40 hours. In this regard, the Ac₁ transformation point can be determined from, for example, a change point of a thermal expansion curve determined on the basis of a formastor experiment at a heating rate of 100°C/hr.

In order to melt the high carbon steel sheet having the chemical composition according to the present invention, either a convertor or an electric furnace can be used. The thus melted high carbon steel is made into a slab by ingot making-blooming or continuous casting. The slab is usually heated and, thereafter, is hot-rolled. In this regard, in the case of the slab produced by continuous casting, direct rolling may be applied, where rolling is performed on an as-is basis or while heat is retained to suppress a decrease in temperature. Also, in the case where the slab is heated and is hot-rolled, the slab heating temperature is specified to be preferably 1,280°C or lower to avoid degradation in the surface quality due to scales. In the hot rolling, the member to be rolled may be heated by a heating device, e.g., a sheet bar heater, during the hot rolling in order to ensure the hot rolling finishing temperature.

### EXAMPLES

Hot rolled steel sheets of Samples 1 to 14 having a sheet thickness of 3.0 mm were produced by melting steels having the chemical compositions of Steels A to M shown in Table 1, performing hot rolling under the hot rolling conditions shown in Table 2, performing pickling, and performing spheroidizing annealing at annealing temperatures shown in Table 2 in an atmosphere containing 95 percent by volume of nitrogen and 5 percent by volume of hydrogen.

The amounts of N in the surface layer portions of the thus produced steel sheets were analyzed and, in addition, the average grain sizes of the ferrite and the spheroidization ratios of the carbides were determined by the above-described methods. Meanwhile, a JIS No. 13B tensile test piece was taken in a direction parallel to the rolling direction, and the tensile strength TS and the total elongation El were determined. Furthermore, a test piece of width 50 mm x length 50 mm was taken. A hardening treatment was performed, where the test piece was heated at 870°C for 30 seconds in an atmosphere in which a carbon potential was controlled to become equal to the amount of C in the steel by mixing an RX gas and the air and, thereafter, was put into an oil kept at 120°C, so that the Rockwell C scale hardness (HRC) of the surface layer portion of the steel sheet was determined.

Then, the press formability was evaluated on the basis of El and the hardenability was evaluated on the basis of HRC of the surface layer portion of the steel sheet. Both El and HRC exhibit large dependence on the amount of C and, therefore, the press formability and the hardenability were evaluated as excellent when El ≥ 42% and HRC ≥ 35 at C: 0.20%, El ≥ 35% and HRC ≥ 45 at C: 0.35%, and El ≥ 30% and HRC ≥ 45 at C: 0.48%.

The results are shown in Table 2. It is clear that the inventive example has a microstructure composed of ferrite and carbides, the average amount of N in the surface layer portion of the steel sheet is 0.1 percent by mass or more, the average grain size of the ferrite is 10 to 20 µm, the spheroidization ratio of the carbides is 90% or more and, therefore, excellent press formability and hardenability are exhibited.

**[Table 1]**

| | | | | | | | | | | | (percent by mass) | | |
|---|---|---|---|---|---|---|---|---|---|---|---|---|---|
| Steel | C | Si | Mn | P | S | Al | Cr | B | Ca | N | Others | Ac₁ transformation point (°C) | Remarks |
| A | 0.20 | 0.02 | 0.50 | 0.020 | 0.010 | 0.20 | 0.05 | 0.0030 | 0.0020 | 0.0033 | Ni:0.5 | 711 | within the invention |
| B | 0.35 | 0.02 | 0.19 | 0.014 | 0.002 | 0.13 | 0.10 | 0.0026 | 0.0020 | 0.0039 | Cu:0.5, Mo:0.2 | 723 | within the invention |
| C | 0.35 | 0.02 | 0.19 | 0.015 | 0.002 | 0.19 | 0.10 | 0.0029 | 0.0024 | 0.0037 | - | 723 | within the invention |
| D | 0.35 | 0.02 | 0.18 | 0.012 | 0.002 | 0.52 | 0.10 | 0.0029 | 0.0015 | 0.0033 | Ti:0.02 | 723 | within the invention |
| E | 0.48 | 0.02 | 0.20 | 0.020 | 0.010 | 0.40 | 0.50 | 0.0030 | 0.0011 | 0.0033 | Ti:0.02, V:0.05 | 730 | within the invention |
| F | 0.20 | 0.02 | 0.50 | 0.020 | 0.010 | 0.03 | 0.03 | 0.0003 | 0.0020 | 0.0033 | - | 719 | out of the invention |
| G | 0.35 | 0.02 | 0.19 | 0.040 | 0.020 | 0.19 | 0.10 | 0.0030 | 0.0100 | 0.0033 | - | 723 | out of the invention |
| H | 0.48 | 0.20 | 0.75 | 0.020 | 0.010 | 1.20 | 1.00 | 0.0030 | 0.0003 | 0.0035 | - | 738 | out of the invention |
| I | 0.20 | 0.02 | 0.50 | 0**.**020 | 0.010 | 0.07 | 0.05 | 0.0030 | 0.0020 | 0.0033 | Ni:0.5 | 711 | out of the invention |
| J | 0.35 | 0.02 | 0.18 | 0.012 | 0.002 | 0.07 | 0.10 | 0.0029 | 0.0024 | 0.0037 | - | 723 | out of the invention |
| K | 0.48 | 0.02 | 0.20 | 0.020 | 0.010 | 0.07 | 0.50 | 0.0030 | 0.0011 | 0.0033 | Ti:0.02, V:0.05 | 730 | out of the invention |
| L | 0.48 | 0.02 | 0.75 | 0.020 | 0.010 | 0.20 | 0.10 | 0.0030 | 0.0020 | 0.0035 | - | 735 | out of the invention |
| M | 0.48 | 0.02 | 0.50 | 0.020 | 0.010 | 1.20 | 0.10 | 0.0030 | 0.0020 | 0.0035 | - | 736 | out of the invention |

**[Table 2]**

| Sample | Steel | Hot rolling condition | | Annealing temperature (°C) | Microstructure | | | | Mechanical properties | | | Remarks |
|---|---|---|---|---|---|---|---|---|---|---|---|---|
| | | Hot rolling finishing temperature (°C) | Coiling temperature (°C) | | Configuration* | Average amount of N in the surface layer portion (percent | Average grain size of ferrite (µm) | Spheroidization ratio of carbides (%) | TS (MPa) | El (%) | HRC of surface layer portion after hardening | |
| 1 | A | 890 | 660 | 680 | F+C | 0.12 | 18 | 92 | 350 | 44 | 38 | Inventive example |
| 2 | B | 880 | 550 | 700 | F+C | 0.10 | 14 | 95 | 428 | 39 | 46 | Inventive example |
| 3 | B | 880 | 650 | 700 | F+C | 0.10 | 15 | 92 | 433 | 37 | 45 | Inventive example |
| 4 | C | 880 | 550 | 700 | F+C | 0.13 | 14 | 97 | 415 | 38 | 48 | Inventive example |
| 5 | C | 880 | 650 | 700 | F+C | 0.13 | 15 | 93 | 411 | 37 | 47 | Inventive example |
| 6 | C | 810 | 600 | 680 | F+C | 0.13 | 6 | 94 | 455 | 34 | 48 | Comparative example |
| 7 | C | 850 | 440 | 680 | F+C | 0.13 | 5 | 98 | 500 | 30 | 48 | Comparative example |
| 8 | C | 970 | 680 | 640 | F+C | 0.12 | 24 | 77 | 480 | 28 | 46 | Comparative example |
| 9 | D | 880 | 550 | 700 | F+C | 0.30 | 13 | 98 | 415 | 36 | 47 | Inventive example |
| 10 | D | 880 | 650 | 700 | F+C | 0.30 | 14 | 94 | 424 | 38 | 46 | Inventive example |
| 11 | E | 880 | 650 | 700 | F+C | 0.35 | 12 | 97 | 480 | 32 | 53 | Inventive example |
| 12 | F | 880 | 650 | 700 | F+C | 0.02 | 19 | 91 | 320 | 47 | 25 | Comparative example |
| 13 | G | 880 | 650 | 700 | F+C | 0.13 | 15 | 93 | 480 | 29 | 47 | Comparative example |
| 14 | H | 880 | 650 | 700 | F+C | 0.90 | 11 | 90 | 560 | 24 | 31 | Comparative example |
| 15 | I | 880 | 650 | 700 | F+C | 0.06 | 18 | 91 | 350 | 44 | 31 | Comparative example |
| 16 | J | 880 | 650 | 700 | F+C | 0.08 | 15 | 92 | 430 | 37 | 41 | Comparative example |
| 17 | K | 880 | 650 | 700 | F+C | 0.07 | 12 | 93 | 480 | 32 | 43 | Comparative example |
| 18 | L | 880 | 650 | 700 | F+C | 0.13 | 12 | 93 | 530 | 28 | 50 | Comparative example |
| 19 | M | 880 | 650 | 700 | F+C | 0.90 | 12 | 90 | 530 | 28 | 48 | Comparative example |

| | | | | | | | | | | | | |
|---|---|---|---|---|---|---|---|---|---|---|---|---|
| * : F ferrite, C carbide | | | | | | | | | | | | |

## Claims

1. A high carbon hot rolled steel sheet comprising a chemical composition consisting of, by mass%, C: 0.20% to 0.48%, Si: 0.1% or less, Mn: 0.5% or less, P: 0.03% or less, S: 0.01% or less, Al: 0.1% to 0.6%, Cr: 0.05% to 0.5%, B: 0.0005% to 0.0050%, Ca: 0.0010% to 0.0050%,
optionally 2% or less in total of at least one of Cu, Ni, and Mo,
optionally 0.10% or less in total of at least one of Ti and V,
where the average amount of N in a surface layer portion from the surface to the position at a depth of 0.1 mm in thickness direction is 0.1% or more and the average amount of N in the central portion in thickness is 0.01% or less, and the remainder of the chemical composition being Fe and incidental impurities, on a percent by mass basis,
and a microstructure of the high carbon hot rolled steel sheet is composed of ferrite and carbides, wherein the average grain size of the ferrite is 10 to 20 µm and the spheroidization ratio of the carbides is 90% or more.

2. A method for manufacturing a high carbon hot rolled steel sheet, the method comprising the steps of rough rolling the steel having the chemical composition according to Claim 1, performing hot rolling at a hot rolling finishing temperature of 850°C to 950°C, performing coiling at a coiling temperature of 500°C or higher, performing pickling, and performing spheroidizing annealing of carbides at an annealing temperature of 680°C or higher and the Ac₁ transformation point or lower in an atmosphere containing 50 percent by volume or more of nitrogen gas.

## Patentansprüche

1. Warmgewalztes Stahlblech mit hohem Kohlenstoffgehalt, mit einer chemischen Zusammensetzung, die in Masse-% aus C: 0,20% bis 0,48%, Si: 0,1% oder weniger, Mn: 0,5% oder weniger, P: 0,03% oder weniger, S: 0,01% oder weniger, Al: 0,1% bis 0,6%, Cr: 0,05% bis 0,5%, B: 0,0005% bis 0,0050%, Ca: 0,0010% bis 0,0050%
optional 2% oder weniger in Summe aus zumindest einem aus Cu, Ni und Mo,
optional 0,10% oder weniger in Summe aus zumindest einem aus Ti und V, wobei
die durchschnittliche Menge an N in einem Oberflächenschichtabschnitt von der Oberfläche zu der Position in einer Tiefe von 0,1 mm in der Dickenrichtung 0,1% oder mehr beträgt und die durchschnittliche Menge an N im mittleren Abschnitt in der Dicke 0,01% oder weniger beträgt und als Rest aus Fe und unvermeidbaren Verunreinigungen auf einer Masse-%-Basis besteht, wobei
eine Mikrostruktur des warmgewalzten Stahlblechs mit hohem Kohlenstoffgehalt aus Ferriten und Karbiden zusammengesetzt ist, wobei die mittlere Korngröße des Ferrits 10 bis 20 µm beträgt und das Sphäroidisierungsverhältnis der Karbide 90% oder mehr beträgt.

2. Verfahren zum Herstellen eines warmgewalzten Stahlblechs mit hohem Kohlenstoffgehalt, wobei das Verfahren die Schritte aufweist
Grobwalzen des Stahls, das die chemische Zusammensetzung nach Anspruch 1 aufweist,
Durchführen von Warmwalzen bei einer Warmwalzendtemperatur von 850°C bis 950°C,
Durchführen von Wickeln bei einer Wickeltemperatur von 500°C oder höher,
Durchführen von Beizen und
Durchführen einer Sphäroidisierungswärmebehandlung von Karbiden bei einer Wärmebehandlungstemperatur von 680°C oder höher und dem Ac₁-Transformationspunkt oder niedriger in einer Atmosphäre, die 50 Volumenprozent oder mehr von Stickstoffgas enthält.

## Revendications

1. Tôle d'acier laminée à chaud à teneur en carbone élevée comprenant une composition chimique constituée de, en % en masse, C : 0,20 % à 0,48 %, Si : 0,1 % ou moins, Mn : 0,5 % ou moins, P : 0,03 % ou moins, S : 0,01 % ou moins, Al : 01 % à 0,6 %, Cr : 0,05 % à 0,5 %, B : 0,0005 % à 0,0050 % ; Ca : 0,0010 % à 0,0050 %,
en option 2 % ou moins au total d'au moins un parmi Cu, Ni et Mo,
en option 0,10 % ou moins au total d'au moins un parmi Ti et V,
où la quantité moyenne de N dans une partie de couche de surface depuis la surface à la position à une profondeur de 0,1 mm dans le sens de l'épaisseur est de 0,1 % ou plus et la quantité moyenne de N dans la partie centrale dans l'épaisseur est de 0,01 % ou moins, et le reste de la composition chimique étant du Fe et des impuretés inévitables, sur la base de pourcentage en masse,
et une microstructure de la tôle d'acier laminée à chaud à teneur en carbone élevée est composée de ferrite et de carbures, dans laquelle la taille de particules moyenne de la ferrite va de 10 à 20 µm et le taux de sphéroïdisation des carbures est de 90 % ou plus.

2. Procédé de fabrication d'une tôle d'acier laminée à chaud à teneur élevée en carbone, le procédé comprenant les étapes consistant à laminer de manière brute la tôle présentant la composition chimique selon la revendication 1, réaliser un laminage à chaud à une température de finition de laminage à chaud de 850 °C à 950 °C, réaliser un bobinage à une température de bobinage de 500 °C ou plus, réaliser un décapage, et réaliser un recuit de sphéroïdisation de carbures à une température de recuit de 680 °C ou plus et le point de transformation Ac₁ ou moins dans une atmosphère contant 50 % en volume ou plus d'azote gazeux.
